# EUROPÄISCHE PATENTANMELDUNG

(11) **EP 2 787 327 A2**
(43) Veröffentlichungstag der Anmeldung: **08.10.2014**
(21) Anmeldenummer: 14401027.9
(22) Anmeldetag: 20.02.2014
(51) Int. Cl.: G01D 5/246

(54) **Signalgeber für eine Drehbewegungsmessanordnung**

(30) Priorität: 11.03.2013 DE 102013102371
(71) Anmelder: Danfoss Power Solutions GmbH & Co. OHG, 24539 Neumünster (DE)
(72) Erfinder:
(74) Vertreter: Nestler, Jan Hendrik

(57) **Zusammenfassung**

Die Erfindung betrifft für eine Drehbewegungsmessanordnung (1, 16) mit einem Signalgeberrad (2), das eine Mehrzahl von Markierungseinrichtungen (8, 9, 10) aufweist. Die die Markierungseinrichtungen (10) sind mit einer im Wesentlichen n-zähligen Symmetrie an der Signalgebervorrichtung (2) angeordnet. Die Markierungseinrichtungen (10) weist eine Unterstrukturierungseinrichtung (8, 9) auf, die die Markierungseinrichtungen (10) voneinander unterscheidbar machen.

## Beschreibung

Die Erfindung betrifft eine Signalgebervorrichtung für eine Drehbewegungsmessanordnung. Weiterhin betrifft die Erfindung eine Drehbewegungsmessanordnung. Schließlich betrifft die Erfindung eine Hydraulikpumpen- und/oder Hydraulikmotoreinrichtung.

Die Erfassung von Drehbewegungen ist in der Technik bei einer Vielzahl von unterschiedlichen Vorrichtungen und in unterschiedlichsten Anwendungsgebieten erforderlich. Unter einer Erfassung von Drehbewegungen ist eine große Bandbreite an Anwendungen denkbar.

So ist es beispielsweise denkbar, dass Drehbewegungen mechanisch erfasst werden und über eine Mechanik in Folgebewegungen umgesetzt werden. Ein Beispiel hierfür sind Verbrennungsmotoren, bei denen die Drehbewegung einer Kurbelwelle über einen Zahnriemen zunächst auf eine Nockenwelle übertragen wird. Hier bewirken die sich drehenden Nocken über den Kontakt mit hierzu korrespondierenden Kontaktstiften eine Auf- und Abbewegung, die mittelbar oder unmittelbar in eine Auf- und Abbewegung von Ventilen umgesetzt wird.

Mit der zunehmenden Verwendung von elektrischen und elektronischen Steuerungen wird es jedoch in zunehmendem Maße erforderlich, dass eine Drehbewegung beispielsweise über geeignete Sensoren erfasst wird und so in elektrische bzw. elektronische Signale umgesetzt wird. Diese können dann wiederum weiterverarbeitet werden und anschließend zum Beispiel zur Ansteuerung von geeigneten Aktuatoren genutzt werden.

Je nach konkretem Einsatzgebiet sind an die "Güte" der elektrischen bzw. elektronischen Signale, die die Drehbewegung repräsentieren, unterschiedliche Anforderungen zu stellen. Unter einer "Güte" des Signals ist beispielsweise an eine bestimmte Genauigkeit bzw. Auflösungsgenauigkeit hinsichtlich der Drehgeschwindigkeit, der Winkelposition und/oder der Häufigkeit, mit der Daten erfasst werden (beispielsweise eine Erfassung pro Umdrehung, pro Halbumdrehung usw.) zu denken. Auch kann es bei bestimmten Anwendungsgebieten erforderlich sein, die Richtung der Drehbewegung zu bestimmen, während sich bei anderen Anwendungsgebieten die Richtung der Drehbewegung nicht ändert, und daher nicht gemessen werden muss.

Als zusätzliche Nebenbedingungen sollten die entsprechenden Drehbewegungsmessanordnungen möglichst kompakt im Aufbau und möglichst leicht sein (insbesondere die bewegten Teile der Messanordnung) und darüber hinaus möglichst kostengünstig in der Herstellung und im Gebrauch sein. Darüber hinaus sollten eine möglichst geringe Reibung und ein möglichst geringer Verschleiß vorhanden sein. Weiterhin sollten die entsprechenden Drehbewegungsmessanordnungen möglichst unempfindlich gegenüber den betreffenden Einsatzumgebungen sein, und beispielsweise unempfindlich gegenüber Wärme, Kälte, Vibrationen, Verschmutzung, stark schwankenden Temperaturen und dergleichen sein. Eine weitere Anforderung ist, dass (insbesondere auch aus Kostengründen) eine möglichst geringe Anzahl von eigentlichen Messsensoren verwendet werden soll und/oder dass diese möglichst einfach aufgebaut sein sollen.

Eine im Stand der Technik bekannte Drehbewegungsmessanordnung weist als Signalgebervorrichtung eine Art Zahnrad auf. Die einzelnen Zähne des Zahnrads unterbrechen den Lichtstrahl einer passend angeordneten Lichtschranke. In Abhängigkeit von der Häufigkeit der Unterbrechung des Lichtstrahls kann auf die Geschwindigkeit der Drehbewegung geschlossen werden. Ein Nachteil bei dieser Art von Drehbewegungsmessung besteht darin, dass eine Information über die Absolutposition der Vorrichtung nicht erhalten werden kann. Sollte diese Informationen vonnöten sein, so ist es erforderlich, dass eine zweite Signalgebervorrichtung mit einem dazu passenden Sensor vorgesehen wird. Auch ist es in der Regel problematisch die Richtung der Drehbewegung zu erfassen, insbesondere dann, wenn lediglich ein einzelner Sensor (beispielsweise eine einzelne Lichtschranke) verwendet werden soll.

In der deutschen Offenlegungsschrift D 10 2010 041 444 A1 ist eine Sensoranordnung mit einem Geberrad beschrieben, welches an der Kurbelwelle einer Brennkraftmaschine angeordnet ist. Das Geberrad ist in Form eines Zahnrads ausgebildet. Es wird vorgeschlagen, dass ein Zahn oder eine Folge mehrerer am Rand des Geberrads nebeneinander angeordneter Zähne eine Markierung bilden, durch die eine Absolutpositionierung des Geberrad codiert wird. Insbesondere wird vorgeschlagen, dass die Zähne mit einer unterschiedlichen Geometrie, wie insbesondere einer unterschiedlichen Höhe, versehen sind. Dementsprechend muss die Sensoranordnung unterschiedliche Signalstärken messen und verarbeiten können.

Im US-Patent US 6,404,188 B1 ist ein Geberrad mit einem magnetisch arbeitenden Sensorsystem offenbart. Das Geberrad ist so aufgebaut, dass es mit einer Vielzahl, äquidistant angeordneter Markierungen versehen ist. Die einzelnen Markierungen sind zum Teil unterschiedlich zueinander ausgebildet. Insbesondere werden unterschiedliche Formgebungen und unterschiedliche Höhen der einzelnen Markierungen vorgeschlagen. Dementsprechend muss auch hier die Sensoranordnung unterschiedliche Signalhöhen messen und verarbeiten können.

Auch wenn die im Stand der Technik bekannten Drehbewegungsmessanordnungen grundsätzlich funktionstüchtig sind, besteht nach wie vor ein Bedarf an Verbesserungen.

Die Aufgabe der Erfindung besteht darin, eine gegenüber im Stand der Technik bekannten Signalgebervorrichtungen verbesserte Signalgebervorrichtung für eine Drehbewegungsmessanordnung vorzuschlagen. Die Aufgabe der Erfindung besteht weiterhin darin, eine gegenüber im Stand der Technik bekannten Drehbewegungsmessanordnungen verbesserte Drehbewegungsmessanordnung vorzuschlagen. Schließlich besteht eine weitere Aufgabe der Erfindung darin, eine gegenüber im Stand der Technik bekannten Hydraulikpumpen- und/oder Hydraulikmotoreinrichtungen verbesserte Hydraulikpumpen- und/oder Hydraulikmotoreinrichtung vorzuschlagen.

Die Erfindung löst die Aufgabe.

Es wird vorgeschlagen, eine Signalgebervorrichtung für eine Drehbewegungsmessanordnung, die eine Mehrzahl von Markierungseinrichtungen aufweist, und bei der die Markierungseinrichtungen mit einer im Wesentlichen n-zähligen Symmetrie an der Signalgebervorrichtung angeordnet sind, derart auszubilden, dass zumindest Teile der Markierungseinrichtungen zumindest eine Unterstrukturierungseinrichtung aufweisen, die zumindest Teile der Markierungseinrichtungen voneinander unterscheidbar machen. n kann eine beliebige ganzzahlige Zahl sein. Die Anzahl an Markierungseinrichtungen ist dabei vorzugsweise an die jeweilige Aufgabe bzw. an die konkreten Anforderungen des Einsatzzwecks angepasst. Werden beispielsweise Markierungseinrichtungen im Abstand von 60° verwendet (siehe auch folgende Beschreibung), so ergibt sich eine 6-zählige Symmetrie. Dementsprechend ergibt sich eine angulare Auflösung von 60°, was für manche Anwendungen völlig ausreichend ist; sich für andere Anwendungen dagegen als nicht ausreichend erweisen kann. Werden dagegen beispielsweise Markierungseinrichtungen im Abstand von 6° verwendet, so ergibt sich eine 60-zählige Symmetrie. Dementsprechend ergibt sich ein angulares Auflösungsvermögen von 6°. Der Begriff einer "Markierungseinrichtung" bzw. einer "Unterstrukturierungseinrichtung" ist gegebenenfalls jeweils relativ breit aufzufassen. So kann unter einer "Markierungseinrichtung" beispielsweise auch eine Kombination von Einrichtungen verstanden werden. Rein beispielhaft kann es sich bei einer Markierungseinrichtung also nicht nur um eine einzelne Magneteinrichtung, eine einzelne Ausnehmung, ein einzelnes Fenster, einen einzelnen Vorsprung bzw. einen einzelnen Rücksprung handeln, sondern auch um eine Kombination von mehreren der genannten Einrichtungen (sowie gegebenenfalls weiterer Einrichtungen). Mit anderen Worten kann es sich bei einer Markierungseinrichtung um eine Art von "Strukturanordnung" bzw. "Strukturierungsanordnung" handeln, also um eine Aneinanderreihung unterschiedlicher (insbesondere mechanischer) Strukturen. Um auch hier ein konkretes Beispiel zu nennen, kann es sich bei einer Markierungseinrichtung beispielsweise um eine Aufeinanderfolge von einem Vorsprung und einem Rücksprung handeln bzw. um eine Kombination von einem Vorsprung und einer Magneteinrichtung und dergleichen. Dementsprechend ist auch der Begriff einer "Unterstrukturierungseinrichtung" gegebenenfalls vergleichsweise breit aufzufassen. So kann es sich beispielsweise im Falle einer Markierungseinrichtung, die als Abfolge aus einem Vorsprung und aus einem Rücksprung ausgebildet ist, um ein "Pulsweitenverhältnis" dieser Kombination handeln (also um ein Längenverhältnis zwischen dem Vorsprung und dem Rücksprung). Mit anderen Worten kann es sich bei einer Unterstrukturierungseinrichtung also um eine Längenvariationseinrichtung bzw. um eine Längenverhältnisvariationseinrichtung handeln. Im Übrigen ist sowohl im Rahmen einer "Markierungseinrichtung" bzw. einer "Unterstrukturierungseinrichtung" nicht nur an "Einerkombinationen" bzw. "Zweierkombinationen" zu denken, sondern auch an "Dreierkombinationen", "Viererkombinationen", "Fünferkombinationen", "Sechserkombinationen", "Siebenerkombinationen", "Achterkombinationen", "Neunerkombinationen" bzw. "Zehnerkombinationen". Lediglich der Vollständigkeit halber sollte darauf hingewiesen werden, dass (in Abhängigkeit von der konkreten Realisierung) auch das Fehlen einer Unterstrukturierungseinrichtung an einer Markierungseinrichtung als eine Art von Unterstrukturierungseinrichtung der Markierungseinrichtung aufgefasst werden kann. Die Anzahl der voneinander unterscheidbaren Unterstrukturierungseinrichtungen der Markierungseinrichtungen ist ebenfalls sinnvollerweise in Abhängigkeit von den konkreten Einsatzerfordernissen zu wählen. Grundsätzlich kann gesagt werden, dass eine vergleichsweise geringe Anzahl von Unterstrukturierungseinrichtungen einen einfacheren und robusteren Aufbau der Signalgebervorrichtung fördert. Umgekehrt ermöglicht eine größere Anzahl an Unterstrukturierungseinrichtungen üblicherweise eine schnellere bzw. genauere Aussage über Drehrichtung und/oder Absolut-positionierung (wobei sich die "Absolutpositionierung" auch auf eine Bestimmung der Position in einem Teilwinkelbereich, beispielsweise in einem Quadrant von 90°, beziehen kann). Insbesondere um eine Absolutpositionierung (wobei - wie bereits erwähnt - sich die "Absolutpositionierung" auch auf einen Teilwinkelbereich beziehen kann) zu realisieren, ist es möglich, dass bei den Markierungseinrichtungen insbesondere an einer einzelnen Stelle die n-zählige Symmetrie durchbrochen wird bzw. eine "spezielle Unterstrukturierungseinrichtung" für diesen Zweck genutzt wird. Im Übrigen ist auch daran zu denken, dass beispielsweise an einer bestimmten Position an der Signalgebervorrichtung eine spezielle Abfolge von Unterstrukturierungseinrichtungen der Markierungseinrichtungen angeordnet wird und dementsprechend der entsprechende Bereich besonders ausgezeichnet ist (insbesondere eindeutig bzw. einzigartig ausgebildet ist).

Als bevorzugte Ausbildung der Signalgebervorrichtung wird vorgeschlagen, dass zumindest drei Gruppen von Markierungseinrichtungen voneinander unterscheidbar sind, bzw. dass zumindest drei unterschiedliche Unterstrukturierungseinrichtungen vorgesehen sind. Wie bereits erwähnt, kann auch das Fehlen einer Unterstrukturierungseinrichtung als eine "spezielle Bauausführung" einer Unterstrukturierungseinrichtung angesehen werden. Ein Vorteil beim Vorsehen von zumindest drei unterschiedlichen Unterstrukturierungseinrichtungen/zumindest drei Gruppen von Markierungseinrichtungen ist es, dass insbesondere auch die Drehrichtung der Drehbewegungsmessanordnung erfasst werden kann (wenn auch nicht notwendigerweise bereits nach Durchlaufen von 360°/n (die Einheit ist Winkelgrad bei einem Vollkreis von 360°), sondern typischerweise erst nach Durchlaufen von ungefähr 3*360°/n). Gegebenenfalls ist es auch von Vorteil, wenn noch eine vierte Unterstrukturierungseinrichtung vorgesehen wird, mit der eine dedizierte Absolutposition bestimmt werden kann. Eine derartige dedizierte Absolutposition kann gegebenenfalls auch mit lediglich drei unterschiedlichen Unterstrukturierungseinrichtungen realisiert werden, wobei an "einer Stelle" eine "spezielle Abfolge" von Unterstrukturierungseinrichtungen vorgesehen wird. Lediglich der Vollständigkeit halber sollte darauf hingewiesen werden, dass es selbstverständlich auch möglich ist, 2, 5, 6, 7, 8, 9, 10, 11, 12, 13, 14 oder 15 verschiedene, voneinander unterscheidbare Gruppen von Markierungseinrichtungen vorzusehen.

Weiterhin wird vorgeschlagen, dass die Markierungseinrichtungen und/oder die Unterstrukturierungseinrichtungen als Binäreinrichtungen ausgebildet sind. Unter einer "Binäreinrichtung" ist insbesondere zu verstehen, dass das Messergebnis als binärer Wert vorliegt, gemessen wird und/oder genutzt wird. Dementsprechend erfolgt also die Kodierung ohne "Zwischenwert", sondern lediglich als "an" bzw. "aus". Dies schließt selbstverständlich nicht aus, dass beispielsweise durch Verschmutzung und dergleichen auch (an sich unbeabsichtigte) Zwischenwerte entstehen können. Diese sind jedoch in der Regel weder erwünscht noch werden diese als gesonderte Werte in der weiteren Verarbeitung berücksichtigt. Als Beispiel für derartige Binäreinrichtungen ist beispielsweise eine Art Zahnrad mit rechteckigen Zähnen zu nennen (entweder Vorsprung bzw. Rücksprung). Andere Möglichkeiten sind auch beispielsweise Ausnehmung (beispielsweise in Form einer Bohrung) - nicht-Ausnehmung, Fenster bzw. nicht-Fenster, Magnetfeld - nicht-Magnetfeld und dergleichen. Eine derartige Ausbildung als Binäreinrichtung ist üblicherweise besonders unempfindlich gegenüber Störungen, Verschmutzungen im Betrieb und dergleichen, ist darüber hinaus in der Regel besonders einfach (und damit auch kostengünstig) herstellbar und begnügt sich in aller Regel mit einem besonders einfach aufgebauten Messsensor, was insbesondere kostenreduzierend wirken kann.

Als besonders bevorzugt kann es sich erweisen, wenn bei der Signalgebervorrichtung die Markierungseinrichtungen und die Unterstrukturierungseinrichtungen auf einem gleichartigen Phänomen beruhend ausgebildet sind. So ist es beispielsweise denkbar, dass es sich sowohl bei den Markierungseinrichtungen als auch bei den Unterstrukturierungseinrichtungen um Vorsprünge bzw. Rücksprünge handelt. In einem derartigen Fall kann dann das Auslesen der Signale mit einem gleichartigen Sensor erfolgen (beispielsweise mit einer Lichtschranke). Es ist gegebenenfalls sogar möglich (und darüber hinaus in der Regel auch bevorzugt), dass für das Auslesen der Markierungseinrichtungen und der Unterstrukturierungseinrichtungen ein- und derselbe Sensor verwendet werden kann. Dies erweist sich meist als besonders kostengünstig (nicht nur hinsichtlich der Sensoren, sondern auch hinsichtlich der Auswerteelektronik und dergleichen).

Weiterhin kann es vorteilhaft sein, wenn bei der Signalgebervorrichtung die Markierungseinrichtungen und/oder die Unterstrukturierungseinrichtungen als zumindest ein Vorsprung, als zumindest ein Rücksprung, als zumindest ein durchgängiger Bereich, als zumindest eine Ausnehmung und/oder als zumindest eine Fenstervorrichtung ausgebildet sind, insbesondere als Kombination von zumindest einem Vorsprung und zumindest einem Rücksprung oder zumindest einem durchgängigen Bereich und zumindest einer Ausnehmung bzw. zumindest einer Fenstereinrichtung. Derartige Markierungseinrichtungen bzw. Unterstrukturierungseinrichtungen haben sich in ersten Versuchen als besonders kostengünstig, einfach herzustellen und hinsichtlich der realisierbaren Messgenauigkeit als besonders vorteilhaft erwiesen. Darüber hinaus sind derartige Ausbildungen in der Regel vergleichsweise unempfindlich gegenüber Verschmutzungen, Abnutzungserscheinungen und dergleichen. Weiterhin handelt es sich um eine vergleichsweise etablierte zu Grunde liegende Technologie, sodass auch diesbezüglich die Herstellung unproblematisch erscheint.

Als besonders bevorzugt kann es sich insbesondere in diesem Zusammenhang erweisen, wenn bei der Signalgebervorrichtung die Markierungseinrichtungen eine im Wesentlichen gleichartige Länge aufweisen und insbesondere als Strukturierungsanordnung, bevorzugt als eine Kombination von zumindest einem Vorsprung, zumindest einem Rücksprung, zumindest einem durchgängigen Bereich, zumindest einer Ausnehmung und/oder zumindest einer Fenstereinrichtung, besonders bevorzugt als eine Kombination aus zumindest einem Vorsprung und zumindest einem Rücksprung oder aus zumindest einem durchgängigen Bereich und zumindest einer Ausnehmung bzw. zumindest einer Fenstereinrichtung ausgebildet sind. Erste Versuche haben ergeben, dass hierdurch ein besonders vorteilhafter Aufbau realisierbar ist (insbesondere hinsichtlich seiner universellen Anwendbarkeit), der darüber hinaus auch kostengünstig zu realisieren ist. So ist es beispielsweise aufgrund der konstanten Länge einer Markierungseinrichtung möglich, dass jedes Mal nach Durchschreiten von 360°/n eine Geschwindigkeitsmessung möglich ist. Dennoch kann "parallel" hierzu (und insbesondere auch mit ein- und demselben Sensor!) eine zusätzliche Information übermittelt werden, aus der (in der Regel nach Durchschreiten mehrerer Markierungseinrichtungen bzw. Unterstrukturierungseinrichtungen) zusätzliche Informationen, wie beispielsweise die Drehrichtung der Signalgebervorrichtung, eine zusätzliche Positionierungsinformation (beispielsweise Absolutpositionierung) und dergleichen ermittelt werden können. Unter einer Länge kann beispielsweise die "Gesamtlänge" aus einem Vorsprung und aus einem Rücksprung (mithin aus einem "Gesamtintervall") verstanden werden. Gegebenenfalls kann sich die "Gesamtlänge" auch aus einer größeren Anzahl an "Einzelelementen" bestimmen. Als "Strukturierungsanordnung" kann selbstverständlich nicht nur eine Anordnung von mechanischen Strukturen wie Vorsprüngen, Rücksprüngen, durchgängigen Bereichen, Ausnehmungen bzw. Fenstereinrichtungen verstanden werden, sondern grundsätzlich eine im Wesentlichen beliebige Anordnung im Wesentlichen beliebiger Strukturen (wie beispielsweise von Magnetfeldern oder dergleichen).

Weiterhin kann es sich als vorteilhaft erweisen, wenn bei der Signalgebervorrichtung eine n-zählige Symmetrie der Markierungseinrichtungen an der Signalgebervorrichtung gegeben ist oder wenn bei der Signalgebervorrichtung die n-zählige Symmetrie der Markierungseinrichtungen an der Signalgebervorrichtung aufgebrochen ist. Mit einer derartigen Ausbildung ist es beispielsweise möglich, eine Information bezüglich einer Absolutpositionierung der Signalgebervorrichtung auf einfache Weise realisieren zu können (insbesondere bei Durchbrechen der n-zähligen Symmetrie). Ein derartiges Durchbrechen der n-zähligen Symmetrie kann beispielsweise im Falle einer Ausbildung der Signalgebervorrichtung mit Vorsprüngen und Rücksprüngen durch "Auslassen" eines Vorsprungs bzw. einer Vorsprungs-Rücksprungs-Paarung realisiert werden. Dieses "Auslassen" kann beispielsweise dadurch umgesetzt werden, dass ein Vorsprung vollständig entfällt (bzw. ein Rücksprung, eine Fenstereinrichtung bzw. eine Ausnehmung vollständig entfällt) bzw. die Länge der Markierungseinrichtung in diesem Bereich "künstlich verändert", insbesondere "künstlich erhöht", wie beispielsweise verdoppelt, wird. Es kann sich aber auch als vorteilhaft erweisen, wenn die n-zählige Symmetrie vollständig aufrechterhalten bleibt. Eine Positionierungsinformation (insbesondere Absolutpositionierungsinformation) kann dann beispielsweise dadurch realisiert werden, dass in einem Bereich eine spezielle (für die Signalgebervorrichtung "einzigartige") Unterstrukturierungseinrichtung vorgesehen wird bzw. eine "einzigartige" Abfolge von Unterstrukturierungseinrichtungen vorgesehen wird. Ein Vorteil bei einer derartigen Ausbildung kann insbesondere darin gesehen werden, dass die Geschwindigkeitsinformation "immer" im n-zähligen Raster gewonnen werden kann, sodass kein "temporärer Ausfall" der Messgenauigkeit eintritt. Dies kann für manche Anwendungsgebiete von Vorteil oder sogar entscheidend sein.

Weiterhin wird vorgeschlagen, dass bei der Signalgebervorrichtung zumindest bereichsweise eine Serie von unterschiedlichen Unterstrukturierungseinrichtungen vorzugsweise sich wiederholend aufeinander abfolgend an der Signalgebervorrichtung angeordnet ist, wobei bevorzugt innerhalb einer Serie aus Unterstrukturierungseinrichtungen eine monotone, insbesondere streng monotone Änderung von Teilen einer Strukturierungsanordnung vorhanden ist. Speziell kann die (streng) monotone Änderung annähernd gleichmäßig erfolgen. Im Falle von "Dreier-Serien" kann es sich beispielsweise um eine sich wiederholende Abfolge "...-1-2-3-1-2-3-1-2-3-..." usw. handeln. Eine bereits vorab angesprochene Absolutpositionierung kann dann beispielsweise durch eine Abfolge "...-1-2-3-1-2-3-4-1-2-3-..." oder aber auch beispielsweise durch "...-1-2-3-1-1-2-3-1-2-3-..." umgesetzt werden (hierbei ist die Kombination "...-1-1-..." die "einzigartige" Kombination). Wie man erkennen kann, ist jeweils innerhalb einer Serie aus "...-1-2-3-..." eine streng monotone Zunahme des jeweiligen Werts gegeben. Die Zahlen können sich beispielsweise auf Vorsprünge, Rücksprünge, durchgängige Bereiche, Ausnehmungen oder Fenstereinrichtungen (insbesondere von deren jeweiliger Länge) beziehen.

Weiterhin wird vorgeschlagen, die Signalgebervorrichtung derart weiterzubilden, dass zumindest Teile der Markierungseinrichtungen, insbesondere zumindest Teile der Unterstrukturierungseinrichtungen derart ausgebildet und eingerichtet sind, dass eine variierende, insbesondere eine invertierende Betrachtungslogik der Markierungseinrichtungen eine Information enthält. Beispielsweise ist es möglich, dass eine Markierungseinrichtung als Anordnung aus einem Vorsprung und aus einem Rücksprung besteht und die Länge einer Markierungseinrichtung als "der Abstand" zwischen zwei abfallenden Flanken (insbesondere in eine bestimmte Richtung wie dem Uhrzeigersinn betrachtet) angesehen wird. Die Unterstrukturierungseinrichtung soll in diesem Beispiel das Längenverhältnis zwischen Vorsprung und Rücksprung sein. Bei einer konstanten Länge der Markierungseinrichtungen ist dementsprechend der Abstand zwischen zwei abfallenden Flanken konstant. Nun kann die Variation des Längenverhältnisses zwischen Vorsprung und Rücksprung derart gewählt werden, dass gewissermaßen in Umkehrung der Betrachtungslogik ("invertierende Betrachtungslogik"), nämlich wenn man den Abstand zwischen zwei ansteigenden Flanken betrachtet, auch dieser Abstand eine bestimmte Information enthält. Beispielsweise ist es möglich, dass dieser durch "invertierende Betrachtungslogik" gewonnene Abstand innerhalb einer Serie aus Unterstrukturierungseinrichtungen jeweils ansteigt (bevorzugt annähernd gleichmäßig ansteigt, also nach Art einer "Sägezahnfunktion" ansteigt). Hierdurch ist es möglich, dass mit dem gleichen Messsignal besonders einfach zusätzliche Aussagen getroffen werden können. So ist es beispielsweise möglich, besonders einfach eine Aussage über eine Drehrichtung treffen zu können. Hierdurch kann insbesondere die Auswertelogik einfacher ausfallen (und damit können gegebenenfalls die entsprechenden erforderlichen Bauteile einfacher, in geringerer Anzahl und gegebenenfalls auch mit geringerer Performanz vorgesehen werden). Insbesondere soll es möglich sein, ein derartiges Verfahren und/oder eine geeignet eingerichtete Auswertevorrichtung jeweils im Rahmen eines unabhängigen (nebengeordneten) Anspruchs beanspruchen zu können. Speziell soll es möglich sein, ein Verfahren (bzw. ein entsprechend eingerichtete Auswertevorrichtung) zu beanspruchen, bei dem ein von einer Sensoreinrichtung stammendes Signal mittels zumindest zweier voneinander abweichender Auswertelogiken/Auswerteprinzipien ausgewertet wird. Insbesondere kann die "von der ersten Auswertelogik" abweichende, zweite Auswertelogik durch eine (initiale) Invertierung des Signals erfolgen. Dies schließt es selbstverständlich nicht aus, dass nach der initialen Signal-Aufbereitung noch weitere Aufbereitungsschritte/Bearbeitungsschritte durchgeführt werden.

Besonders vorteilhaft ist es, wenn die Signalgebervorrichtung einteilig und/oder einstückig ausgebildet ist. In einem solchen Fall kann die Signalgebervorrichtung besonders einfach im Aufbau und/oder in der Herstellung sein. Auch die Standzeit der Signalgebervorrichtung kann sich gegebenenfalls erhöhen. Unter "einteilig" wird vorliegend insbesondere verstanden, wenn eine Baugruppe zwar aus mehreren Einzelkomponenten zusammengefügt ist, diese jedoch fest miteinander verbunden sind (und gegebenenfalls auch unlösbar miteinander verbunden sind), wobei die "ursprünglichen" Einzelkomponenten jedoch noch als solche identifizierbar sind (wie dies beispielsweise bei einem Mehrkomponenten-Spritzgussverfahren der Fall ist). Demgegenüber wird vorliegend unter "einstückig" insbesondere verstanden, wenn die betreffende Baugruppe aus einem einzelnen Stück gefertigt ist (und im Wesentlichen keine Identifizierbarkeit von "ursprünglichen Einzelkomponenten" mehr möglich ist; dies ist beispielsweise bei einem Einkomponenten-Spritzgussverfahren gegeben).

Weiterhin wird eine Drehbewegungsmessanordnung vorgeschlagen, die zumindest eine Signalgebervorrichtung mit dem vorab beschriebenen Aufbau aufweist. Die Drehbewegungsmessanordnung kann dann die bereits vorab beschriebenen Eigenschaften und Vorteile zumindest in Analogie aufweisen. Auch ist es möglich, dass die Drehbewegungsmessanordnung durch zumindest analoge Anwendung der vorherigen Beschreibung weitergebildet werden kann. Die Drehbewegungsmessanordnung kann insbesondere zusätzlich zur Signalgebervorrichtung Sensoren und/oder elektrische bzw. elektronische Bauteile aufweisen. Im Zusammenhang mit elektrischen bzw. elektronischen Bauteilen ist insbesondere an eine elektronische Steuerung, insbesondere an eine numerische elektronische Steuerung zu denken. Diese kann beispielsweise als Einplatinencomputer oder auch als reguläre Computereinrichtung vorgesehen werden.

Insbesondere ist es möglich, die Drehbewegungsmessanordnung dadurch weiterzubilden, dass genau ein Sensor verwendet wird, und/oder dadurch weiterzubilden, dass ein binär messender Sensor verwendet wird. Bei Verwendung von lediglich einem einzelnen Sensor können sich entsprechende Vorteile insbesondere hinsichtlich des Bauraums und der Kosten ergeben (nicht nur hinsichtlich des Bauraums und der Kosten für den Sensor, sondern beispielsweise auch für die erforderliche Auswerteelektronik). Insbesondere bei Verwendung eines binären messenden Sensors können sich nicht nur die genannten Vorteile hinsichtlich Bauraum und/oder Kosten ergeben, sondern darüber hinaus können auch die resultierenden Messergebnisse besonders genau sein besonders bzw. besonders einfach zu verarbeiten sein. Selbstverständlich ist es auch möglich, eine Mehrzahl an Sensoren zu verwenden, wie insbesondere 2, 3, 4, 5, 6, 7, 8, 9 oder 10 Sensoren. Wenn beispielsweise zwei Sensoren verwendet werden, ist es möglich, dass diese mit einem angularen Versatz von 360°/(2 n) zueinander angeordnet werden. Durch diesen angularen Versatz kann das angulare Auflösungsvermögen der Drehbewegungsmessanordnung gewissermaßen "verdoppelt" werden. Obgleich der Aufwand an Sensoren dadurch erhöht wird, kann der Aufwand der Signalgebervorrichtung verringert werden, so dass "unter dem Strich" ein Vorteil verbleiben kann.

Weiterhin wird vorgeschlagen, eine Signalgebervorrichtung vom vorab beschriebenen Aufbau und/oder eine Drehbewegungsmessanordnung vom vorab beschriebenen Aufbau für eine Hydraulikpumpen- und/oder Hydraulikmotoreinrichtung zu verwenden, insbesondere für eine Hydraulikpumpen- und/oder Hydraulikmotoreinrichtung vom elektrisch kommutierten Hydraulik-pumpen- und/oder Hydraulikmotortyp zu verwenden. Derartige elektrisch kommutierte Hydraulikpumpen- und/oder Hydraulikmotoreinrichtungen sind auch unter dem Begriff "DDP" (für "digital displacement pump") bekannt. Auch dies kann die bereits vorab beschriebenen Vorteile und Eigenschaften, zumindest in Analogie, mit sich bringen.

Weiterhin wird eine Hydraulikpumpen- und/oder Hydraulikmotoreinrichtung vorgeschlagen, die zumindest eine Signalgebervorrichtung und/oder zumindest eine Drehbewegungsmessanordnung vom vorab beschriebenen Typ aufweist. Die Hydraulikpumpen- und/oder Hydraulikmotoreinrichtung kann dann die bereits vorab beschriebenen Vorteile und Eigenschaften, zumindest in Analogie, aufweisen. Auch ist es möglich, die Hydraulikpumpen- und/oder Hydraulikmotoreinrichtung im Sinne der vorherigen Beschreibung weiterzubilden.

Insbesondere kann es sich als vorteilhaft erweisen, wenn die Hydraulikpumpen- und/oder Hydraulikmotoreinrichtung als elektrisch kommutierte Hydraulikpumpen- und/oder Hydraulikmotoreinrichtung ausgebildet ist. Gerade bei derartigen Einrichtungen ist eine vergleichsweise genaue Kenntnis über Drehgeschwindigkeit, Drehposition und/oder Drehrichtung vergleichsweise wichtig.

Im Folgenden wird die Erfindung anhand vorteilhafter Ausführungsbeispiele und unter Bezugnahme auf die beigefügte Zeichnung näher erläutert. Es zeigen:
- Fig. 1:: ein erstes Ausführungsbeispiel für eine Drehbewegungsmessanordnung in einer schematischen Draufsicht;
- Fig. 2:: zwei mögliche Ausführungsbeispiele für Varianten von Signalgebervorrichtungen, jeweils in einer schematischen Ausschnittsdarstellung;
- Fig. 3:: zwei weitere Ausführungsbeispiele für Varianten von Signalgebervorrichtungen, jeweils in einer schematischen Ausschnittsdarstellung;
- Fig. 4:: ein Ausführungsbeispiel für eine elektrisch kommutierte Hydraulikpumpeneinrichtung.

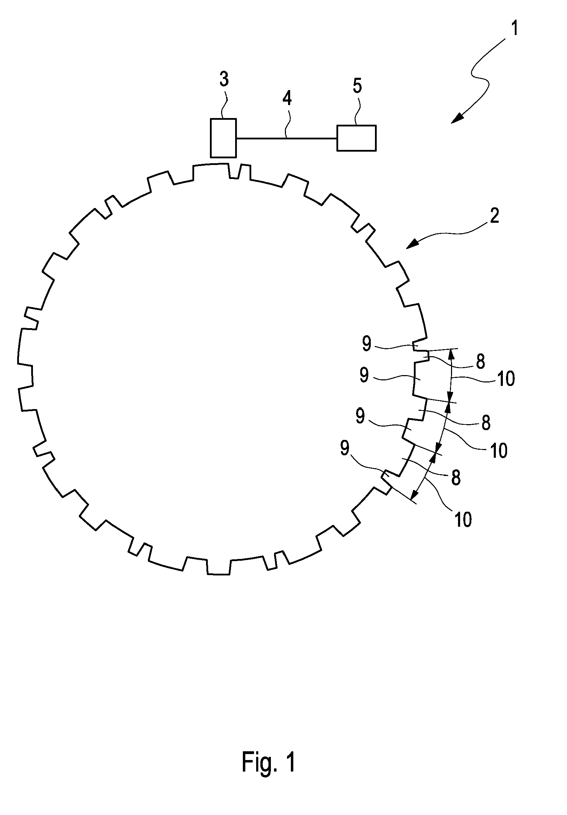

In Fig. 1 ist ein erstes Ausführungsbeispiel für eine Drehbewegungsmessanordnung 1 dargestellt. Die Drehbewegungsmessanordnung 1 weist ein Signalgeberrad 2 auf, das im vorliegend dargestellten Ausführungsbeispiel zahnradartig ausgebildet ist. Darüber hinaus ist ein einzelner Sensor 3 vorgesehen, der über eine Datenleitung 4 die von ihm gemessenen Signale an eine Auswerteelektronik 5 (zum Beispiel an einen Einplatinencomputer) weiterleitet. Ebenfalls sind typischerweise (vorliegend nicht dargestellte) Leitungen zur Stromversorgung und dergleichen vorgesehen.

Der Sensor 3 ist im vorliegend dargestellten Ausführungsbeispiel als Binärsensor ausgebildet. Das heißt, er unterscheidet nur zwischen zwei Zuständen, also zwischen "an" und "aus". Zwischenwerte werden dagegen vom Sensor 3 nicht erfasst (bzw. nicht als solche interpretiert bzw. weitergeleitet, wobei die "Interpretation" auch von der Auswerteelektronik 5 durchgeführt werden kann). Im vorliegend dargestellten Ausführungsbeispiel ist der Sensor 3 als Lichtschranke ausgebildet, wobei es insbesondere möglich ist, dass die Lichtschranke zweiteilig (Lichtquelle und lichtempfindliches Element) ausgebildet ist und in einer anderen Einbaulage und/oder Position als der in Fig. 1 schematisch dargestellten Einbaulage/Position angeordnet ist.

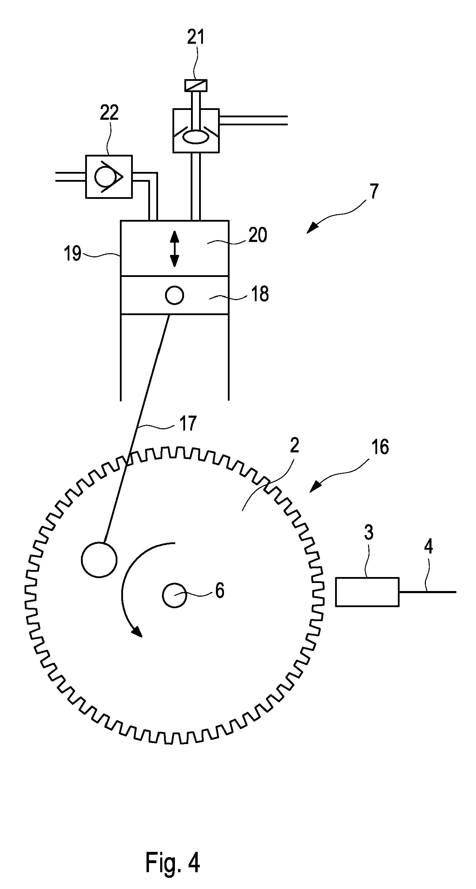

Das Signalgeberrad 2 ist beispielsweise mit der Drehachse 6 einer Hydraulikpumpe 7 (vergleiche Fig. 4) drehfest verbunden.

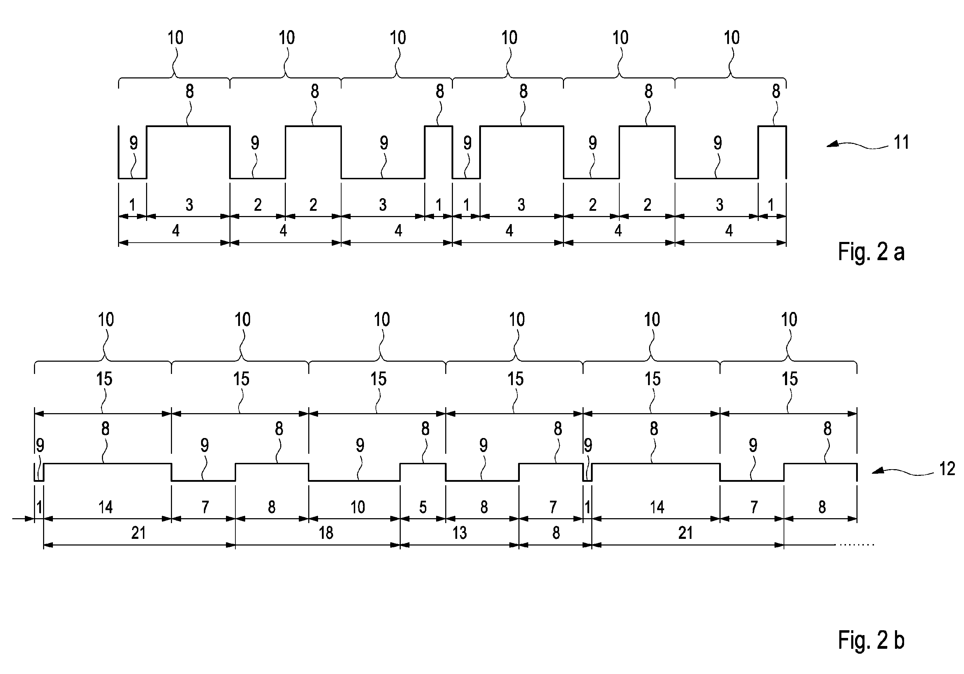

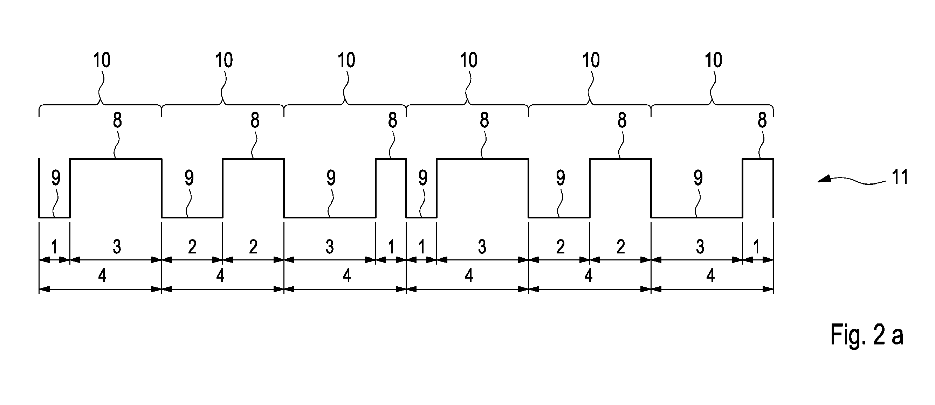

Beim vorliegend dargestellten Signalgeberrad 2 sind insgesamt sechzig Zähne 8 sowie hierzu korrespondierend sechzig Lücken 9 vorgesehen. Eine Kombination aus einem Zahn 8 und einer Lücke 9 bildet eine Zahn-Lücke-Kombination 10. Im vorliegend dargestellten Ausführungsbeispiel (siehe auch insbesondere Fig. 2a) sind insgesamt drei unterschiedliche Zahnarten 8 mit einer unterschiedlichen angularen Breite sowie jeweils drei unterschiedliche Lückenarten 9 mit jeweils einer unterschiedlichen angularen Breite vorgesehen. Die Zähne 8 und die Lücken 9 sind jedoch so angeordnet und ausgebildet, dass die Gesamtlänge einer Zahn-Lücke-Kombination 10 jeweils identisch ist.

Aufgrund der Ausgestaltung des Signalgeberrads 2 unter Verwendung von Zahn-Lücke-Kombinationen 10 mit konstanter Gesamtlänge ist es daher möglich, jeweils nach Durchlaufen einer Zahn-Lücke-Kombination 10 auf die Drehgeschwindigkeit des Signalgeberrads 2 zu schließen.

Darüber hinaus ist es möglich, nach Durchlaufen einer gewissen Anzahl von Zahn-Lücke-Kombinationen 10 (vorliegend drei Zahn-Lücke-Kombinationen 10) auch auf die Drehrichtung des Signalgeberrads 2 schließen zu können.

Insbesondere ist darauf hinzuweisen, dass der Sensor 3 hierzu ausschließlich binäre Signale verarbeiten muss. Es sind also weder zur Ermittlung der Drehgeschwindigkeit noch zur Ermittlung der Drehrichtung des Signalgeber-rads 2, irgendwelche "Zwischenwerte" zu messen bzw. zu berücksichtigen. Insbesondere sind auch keine sägezahnartigen Flanken auf der einen Seite und steil abfallende Flanken auf der anderen Seite eines einzelnen Zahnes zu berücksichtigen. Hierdurch kann sowohl der Sensor 3 als auch die Auswerteelektronik 5 einfacher ausgebildet werden. Darüber hinaus wird durch die vorgeschlagene Ausbildung des Signalgeberrads 2 (und dementsprechend des Sensors 3 und der Auswerteelektronik 5) eine höhere Messgenauigkeit, eine höhere Alterungsbeständigkeit sowie eine höhere Unempfindlichkeit gegenüber Verschmutzungen und dergleichen bewirkt.

Aufgrund der vorliegend gewählten Anzahl von sechzig Zähnen 8, Lücken 9 bzw. Zahn-Lücke-Kombinationen 10 ergibt sich ein angulares Auflösungsvermögen von 6°. Das heißt, nach jeweils 6° Drehung des Signalgeberrads 2 liegt ein neuer Messwert für die Drehgeschwindigkeit des Signalgeberrads 2 vor. In Abhängigkeit von den konkreten Einsatzerfordernissen ist es selbstverständlich möglich, eine größere bzw. kleinere Anzahl an Zähnen 8/Lücken 9/Zahn-Lücke-Kombinationen 10 vorzusehen.

In Fig. 2a ist die beim in Fig. 1 dargestellten Signalgeberrad 2 verwendete Zahn-Lücke-Abfolge 11 genauer dargestellt. Insbesondere sind auch die einzelnen Längen in "Basiseinheiten" dargestellt. Die Länge/angulare Länge einer derartigen Basiseinheit bestimmt sich aus der Anzahl der vorgesehenen Zähne 8 bzw. Lücken 9 und gegebenenfalls auch (betrifft insbesondere die Länge) der Größe des Signalgeberrads 2. Gegebenenfalls haben auch noch weitere Erwägungen (Aufbruch einer Symmetrie der Zahn-Lücke-Anordnung oder dergleichen) einen Einfluss auf die Länge bzw. angulare Länge einer Basiseinheit.

Bei der vorliegend gewählten Zahn-Lücke-Abfolge 11 des Signalgeberrads 2 gemäß Fig. 1 ergibt sich für die angulare Länge einer Basiseinheit eine Länge von 1,5° (Winkelgrad bei einem Vollkreis von 360°).

Wie man sieht, ergibt sich für die Länge der Zahn-Lücke-Abfolge 11 die Sequenz "...-3-2-1-3-2-1-...". Dementsprechend ist hierzu korrespondierend die Sequenz der Länge der einzelnen Lücken 9 "...-1-2-3-1-2-3-1-2-3-...". Die Zähne 8 und die Lücken 9 sind derart angeordnet, dass sich jeweils eine (Gesamt-)Länge einer einzelnen Zahn-Lücke-Kombination 10 von jeweils vier Basiseinheiten ergibt.

Die konstante Länge einer Zahn-Lücke-Kombination 10 macht es dabei möglich, dass jeweils nach dem Durchlaufen von einer Zahn-Lücke-Kombination 10 eine Geschwindigkeit des Signalgeberrad 2 bestimmt werden kann. Weiterhin ist es aufgrund der unterschiedlichen Längen von Zähnen 8 bzw. Lücken 9 möglich, dass nach dem Durchlaufen einer Sequenz von drei Zahn-Lücke-Kombinationen 10 eine Aussage über die Drehrichtung des Signalgeberrads 2 möglich ist. Die mit diesem "Kombinationseffekt" der Zahn-Lücke-Abfolge 11 einhergehenden Vorteile liegen auf der Hand.

Die "Auswertelogik von links nach rechts gelesen" basiert im Rahmen der obigen Beschreibung jeweils auf einer Messung der abfallenden Flanken (also Wechsel von einem Zahn 8 auf eine Lücke 9).

In Fig. 2b ist eine zweite mögliche Ausführungsvariante einer Zahn-Lücke-Abfolge 12 dargestellt. Hier ist als Länge einer Zahn-Lücke-Kombination 10 eine Länge von 15 Basiseinheiten gewählt. Die einzelnen individuellen Längen von Zähnen 8 bzw. Lücken 9 ergeben sich aus der in Fig. 2b mit eingezeichneten Bemaßung.

Wie man Fig. 2b unschwer entnehmen kann, sind vorliegend vier unterschiedliche Zahn-Lücke-Kombinationen 10 vorgesehen. Dies bewirkt zwar eine gewisse erhöhte Komplexität von Signalgeberrad 2 (und schlussendlich auch der Auswerteelektronik 5). Ein Vorteil ist jedoch, dass die vorliegend dargestellte Zahn-Lücke-Abfolge 12 eine höhere Unempfindlichkeit gegenüber häufigen Drehrichtungswechseln und/oder gegenüber sehr häufigen und sprungartig erfolgenden Geschwindigkeitsänderungen zeigt. Dies kann sich bei manchen Anwendungen als vorteilhaft erweisen. Darüber hinaus ist es mit einer größeren Anzahl von Zahn-Lücke-Kombinationen 10 auch möglich bzw. einfacher möglich, eine Messung einer "Absolutpositionierung" des Signalgeberrads 2 durchführen zu können.

Ein Beispiel soll die Empfindlichkeit der in Fig. 2a dargestellten Zahn-Lücke-Abfolge 11 gegenüber Drehrichtungswechseln erläutern. Wenn beispielsweise eine Drehrichtungsumkehr in der "Mitte" eines Zahns 8 mit einer Länge von "2 Einheiten" (also nach Durchlaufen von einer Längeneinheit) auftritt, so ist es möglich, dass die anschließend erfasste Lücke 9 mit einer Länge von "2 Einheiten" nicht als Drehrichtungsumkehr, sondern vielmehr als Geschwindigkeitsänderung aufgefasst wird. "Klarheit" über die tatsächliche Zustandsänderung ergibt sich erst nach Durchlaufen einiger Zahn-Lücke-Kombinationen 10.

Ein zusätzlicher Vorteil der Fig. 2b dargestellten Zahn-Lücke-Abfolge 12 besteht darin, dass in dieser eine vorteilhaft nutzbare Information eincodiert ist (die dementsprechend auch durch einen Sensor 3 erkennbar bzw. durch eine Auswerteelektronik 5 ermittelbar ist), wenn die "Auswertelogik von links nach rechts gelesen" auf den ansteigenden Flanken basiert (also dem Wechsel von einer Lücke 9 zu einem Zahn 18). Zur Veranschaulichung ist der Abstand zwischen zwei ansteigenden Flanken im unteren Bereich von Fig. 2b eingezeichnet. Hier erkennt man, dass sich ein im Wesentlichen gleichmäßiger, streng monoton abnehmender Abstand zwischen zwei ansteigenden Flanken ergibt. Im vorliegenden Beispiel ist die Abfolge "...-21-18-13-8-21-18-...". Dieses gewissermaßen "invertierte" Signal ist besonders vorteilhaft und besonders einfach zur Detektion einer Drehrichtung verwendbar. Insbesondere kann hierdurch die Auswerteelektronik 5 gegebenenfalls besonders einfach ausgeführt werden.

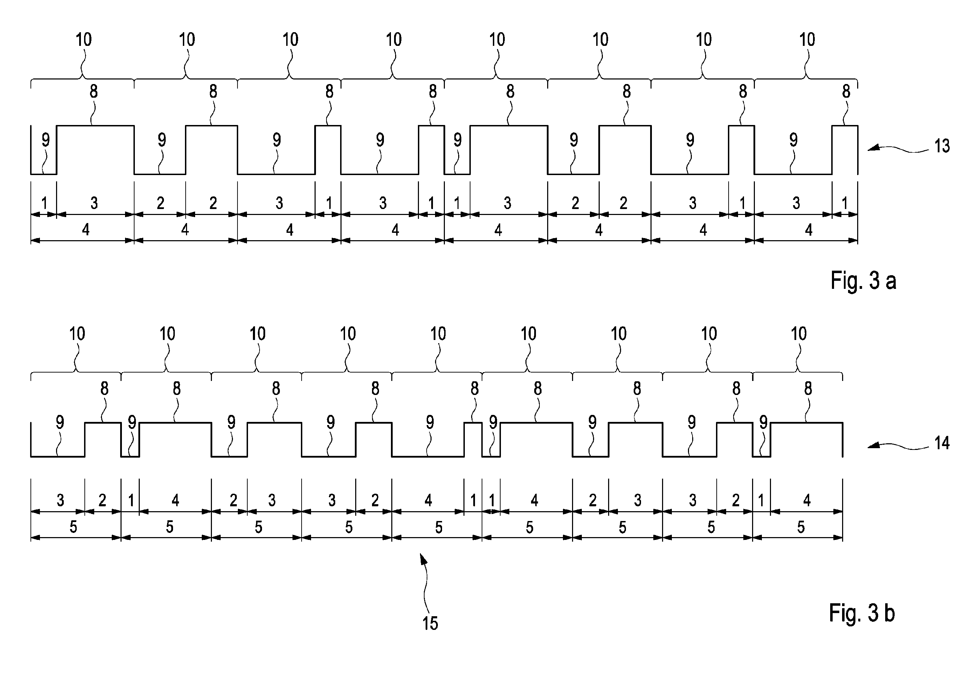

In Fig. 3 sind mögliche Ausführungsvarianten für die Realisierung einer "Absolutpositionierung" dargestellt.

In Fig. 3a wird dies dadurch realisiert, dass - obgleich nur drei unterschiedliche Zahn-Lücke-Kombinationen 10 vorhanden sind - an einer bestimmten Stelle des Signalgeberrads 2 eine besondere Zahn-Lücke-Kombination 10 vorgesehen wird. Die "Absolutpositionierung" erfolgt dadurch, dass an einer einzelnen Stelle des Signalgeberrads 2 nicht die übliche Sequenz von Zahn-Lücke-Kombinationen 10 (also beispielsweise eine Abfolge "...-1-2-3-1-2-3-...") angeordnet ist, sondern diese vielmehr aufgebrochen ist. Im vorliegend dargestellten Ausführungsbeispiel von Fig. 3a ist als Sequenz "...-1-2-3-3-1-2-3-1-2-3-..." gewählt. (Die Längenangaben beziehen sich vorliegend jeweils auf die Lücken 9; die Längen der Zähne 8 ergeben sich hierzu korrespondierend.) Im vorliegenden Fall ist die Sequenz "...-3-3-..." die "einzigartige Abfolge" an Zahn-Lücke-Kombinationen 10.

Bei einer Drehung des Signalgeberrads 2 (wobei gegebenenfalls eine längere Drehung erforderlich ist, bis nach einem "Kaltstart" des Systems die Absolutpositionierung erfasst werden kann) kann somit die Absolutposition des Signalgeberrads, die (aktuelle) Drehrichtung sowie die Drehgeschwindigkeit auf einfache Weise ermittelt werden. Es wird darauf hingewiesen, dass, sobald erstmalig der "Absolutpositionierungsindex" durchlaufen wurde, die aktuelle Absolutposition des Signalgeberrads 2 durch "mitzählen" der Zähne 8 und Lücken 9 kontinuierlich ermittelt werden kann (wobei die jeweilige Drehrichtung mit zu berücksichtigen ist).

Es sollte darauf hingewiesen werden, dass es beim vorliegend dargestellten Ausführungsbeispiel durchaus zu einer "temporären Mehrdeutigkeit" bei der Auswertung der Signale kommen kann, wenn sich die Drehrichtung des Signalgeberrads umgekehrt. Denn wenn sich die Drehrichtung des Signalgeber-rads 2 an einer "ungünstigen" Position umkehrt, kann dies von der Auswer-teelektronik 5 zunächst als Erreichen der "Absolutpositionierungsmarke" erkannt werden. Diese "Mehrdeutigkeit" kann jedoch nach Erkennen der nächsten Zahn-Lücke-Kombination 10 in eindeutiger Weise aufgelöst werden. Denn die nächstfolgende Zahn-Lücke-Kombination 10 ist in Abhängigkeit davon unterschiedlich, ob eine Drehrichtungsumkehr des Signalgeber-rads 2 stattgefunden hat oder ob ein Absolutpositionierungsindex erreicht wurde.

Um die genannte Fehlerabhängigkeit zu reduzieren, ist es insbesondere möglich, dass eine größere Anzahl an unterschiedlichen Zahn-Lücke-Kombinationen 10 vorgesehen wird, wie dies bei der Zahn-Lücke-Abfolge 14 in Fig. 3b dargestellt ist. Beim dort dargestellten Ausführungsbeispiel wird als Länge einer einzelnen Zahn-Lücke-Kombination 10 eine Länge von fünf Einheiten gewählt. Die Sequenzierung der Lücken 9 bzw. der Zähne 8 entspricht von der grundsätzlichen Idee her der Zahn-Lücke-Abfolge 11 gemäß Fig. 2a. Es ist jedoch eine Sequenz von Zahn-Lücke-Kombinationen 10 (vorliegend vier Längeneinheiten Lücke 9 und eine Längeneinheit Zahn 8) als Indexmarke 15 vorgesehen. Diese spezielle Sequenz ist beispielsweise ein einziges Mal entlang des Umfangs des Signalgeberrads 2 vorgesehen. In diesem Fall kann die Indexmarke 15 als "Absolutmarke" für die Absolutpositionierung des Signalgeberrads 2 herangezogen werden. Mit einer derartigen Ausbildung kann die vorab geschilderte Uneindeutigkeit für im Wesentlichen sämtliche realistischerweise zu erwartenden Fälle ausgeschlossen werden.

In Fig. 4 ist schließlich noch ein mögliches (und bevorzugtes) Anwendungsgebiet für die unterschiedlichen denkbaren Ausführungsbeispiele von Drehbewegungsmessanordnungen (beispielsweise die in Fig. 1 dargestellte Drehbewegungsmessanordnung 1) dargestellt. Die in Fig. 4 genutzte Drehbewegungsmessanordnung 16 aus Signalgeberrad 2 und Sensor 3 ist drehfest mit der Drehachse 6 einer Hydraulikpumpe 7 vom elektrisch kommutierten Typ verbunden. Die sich drehende Drehachse 6 treibt über ein Pleuel 17 einen Kolben 18 an, der sich in einem Zylinder 19 auf und ab bewegt. Dadurch ergibt sich ein zyklisch variierendes Kammervolumen 20 im Zylinder 19. Bewegt sich der Kolben 18 nach unten, so wird über ein Einsaugventil 21 Hydrauliköl in die Kammer 20 eingesaugt. Das Einsaugventil 21 ist dabei als elektrisch ansteuerbares Einsaugventil 21 ausgebildet.

Bewegt sich der Kolben 19 nach dem Durchlaufen des unteren Totpunkts wieder nach oben, so wird das in der Kammer 20 eingeschlossene Hydrauliköl über ein passives Hochdruckventil 22 ausgestoßen, sofern das Einsaugventil 21 durch einen elektrischen Impuls geschlossen wurde. Der "Schließbefehl" für das Einsaugventil 21 wird durch eine geeignete (vorliegend nicht dargestellte) Ansteuerelektronik erzeugt. Ist das Einsaugventil 21 aufgrund des Fehlens eines derartigen "Schließbefehls" jedoch weiterhin geöffnet, so wird das in der Kammer 20 eingeschlossene Hydrauliköl über das Einsaugventil 21 in das Hydraulikölreservoir zurückbefördert, ohne "reale" Arbeit zu verrichten.

Mit der Ansteuerungselektronik kann das Einsaugventil 21 nicht nur am oberen bzw. unteren Totpunkt geöffnet bzw. geschlossen werden (oder auch nicht), sondern auch in einer beliebigen Zwischenstellung des Kolbens 18. Hierdurch sind sich sehr schnell veränderliche variable Pumpvolumina realisierbar. Dies stellt einen großen Vorteil von Hydraulikpumpen vom elektrisch kommutierten Typ dar.

## Patentansprüche

1. Signalgebervorrichtung (2) für eine Drehbewegungsmessanordnung (1, 16), aufweisend eine Mehrzahl von Markierungseinrichtungen (8, 9, 10), wobei die Markierungseinrichtungen (10) mit einer im Wesentlichen n-zähligen Symmetrie an der Signalgebervorrichtung (2) angeordnet sind, **dadurch gekennzeichnet, dass** zumindest Teile der Markierungseinrichtungen (10) zumindest eine Unterstrukturierungseinrichtung (8, 9) aufweisen, die zumindest Teile der Markierungseinrichtungen (10) voneinander unterscheidbar machen.

2. Signalgebervorrichtung (2) nach Anspruch 1, **dadurch gekennzeichnet, dass** zumindest drei Gruppen von Markierungseinrichtungen (10) voneinander unterscheidbar sind und/oder **gekennzeichnet durch** zumindest drei unterschiedliche Unterstrukturierungseinrichtungen (8, 9).

3. Signalgebervorrichtung (2) nach Anspruch 1 oder 2, **dadurch gekennzeichnet, dass** die Markierungseinrichtungen (10) und/oder die Unterstrukturierungseinrichtungen (8, 9) als Binäreinrichtungen ausgebildet sind.

4. Signalgebervorrichtung (2) nach einem der vorangehenden Ansprüche, **dadurch gekennzeichnet, dass** die Markierungseinrichtungen (10) und die Unterstrukturierungseinrichtungen (8, 9) auf einem gleichartigen Phänomen beruhend ausgebildet sind.

5. Signalgebervorrichtung (2) nach einem der vorangehenden Ansprüche, **dadurch gekennzeichnet, dass** die Markierungseinrichtungen (10) und/oder die Unterstrukturierungseinrichtungen (8, 9) als zumindest ein Vorsprung (8), als zumindest ein Rücksprung (9), als zumindest ein durchgängiger Bereich, als zumindest eine Ausnehmung und/oder als zumindest eine Fenstereinrichtung, insbesondere als Kombination (10) von zumindest einem Vorsprung (8) und zumindest einem Rücksprung (9) oder zumindest einem durchgängigen Bereich und zumindest einer Ausnehmung bzw. zumindest einer Fenstereinrichtung ausgebildet ist.

6. Signalgebervorrichtung (2) nach einem der vorangehenden Ansprüche, insbesondere nach Anspruch 5, **dadurch gekennzeichnet, dass** die Markierungseinrichtungen (10) eine im Wesentlichen gleichartige Länge aufweisen und insbesondere als Strukturierungsanordnung (10), bevorzugt als eine Kombination (10) von zumindest einem Vorsprung (8), zumindest einem Rücksprung (9), zumindest einem durchgängigen Bereich, zumindest einer Ausnehmung und/oder zumindest einer Fenstereinrichtung, besonders bevorzugt als eine Kombination (10) aus zumindest einem Vorsprung (8) und zumindest einem Rücksprung (9) oder aus zumindest einem durchgängigen Bereich und zumindest einer Ausnehmung bzw. zumindest einer Fenstereinrichtung ausgebildet ist.

7. Signalgebervorrichtung (2) nach einem der vorangehenden Ansprüche, **dadurch gekennzeichnet**, durch eine n-zählige Symmetrie der Markierungseinrichtungen (10) an der Signalgebervorrichtung (2) oder **dadurch gekennzeichnet, dass** die n-zählige Symmetrie der Markierungseinrichtungen (10) an der Signalgebervorrichtung (2) aufgebrochen ist.

8. Signalgebervorrichtung (2) nach einem der vorangehenden Ansprüche, insbesondere nach einem der Ansprüche 6 oder 7, **dadurch gekennzeichnet, dass** zumindest bereichsweise eine Serie von unterschiedlichen Unterstrukturierungseinrichtungen (8, 9) vorzugsweise sich wiederholend aufeinander abfolgend an der Signalgebervorrichtung (2) angeordnet ist, wobei bevorzugt innerhalb einer Serie aus Unterstrukturierungseinrichtungen (8, 9) eine monotone, insbesondere streng monotone Änderung von Teilen (8, 9) einer Strukturierungsanordnung (10) vorhanden ist.

9. Signalgebervorrichtung (2) nach einem der vorangehenden Ansprüche, insbesondere nach Anspruch 8, **dadurch gekennzeichnet, dass** zumindest Teile der Markierungseinrichtungen (10), insbesondere zumindest Teile der Unterstrukturierungseinrichtungen (8, 9) derart ausgebildet und eingerichtet sind, dass eine variierende, insbesondere eine invertierende Betrachtungslogik der Markierungseinrichtungen (10) eine Information enthält.

10. Drehbewegungsmessanordnung (1, 16), **gekennzeichnet durch** zumindest eine Signalgebervorrichtung (2) nach einem der Ansprüche 1 bis 9.

11. Drehbewegungsmessanordnung (1, 16) nach Anspruch 10, **gekennzeichnet durch** genau einen Sensor (3) und/oder **gekennzeichnet durch** einen binär messenden Sensor (3).

12. Hydraulikpumpen- und/oder Hydraulikmotoreinrichtung (7), **gekennzeichnet durch** zumindest eine Signalgebervorrichtung (2) nach einem der Ansprüche 1 bis 9 und/oder **durch** zumindest eine Drehbewegungsmessanordnung (1, 16) nach Anspruch 10 oder 11.

13. Hydraulikpumpen- und/oder Hydraulikmotoreinrichtung (7) nach Anspruch 12, **dadurch gekennzeichnet, dass** diese als elektrisch kommutierte Hydraulikpumpen- und/oder Hydraulikmotoreinrichtung (7) ausgebildet ist.
